# EUROPEAN PATENT APPLICATION

(11) **EP 2 667 444 A1**
(43) Date of publication of application: **27.11.2013**
(21) Application number: 12168761.0
(22) Date of filing: 21.05.2012
(51) Int. Cl.: H01M 10/0567, H01M 10/0569, H01M 10/0525, H01M 14/00, H01G 9/20

(54) **Use of fluorinated 2-methoxymalonic acid esters in electrolyte or solvent compositions**

(71) Applicant: SOLVAY SA, 1120 Bruxelles (BE)
(72) Inventor: The designation of the inventor has not yet been filed
(74) Representative: Mross, Stefan P.M.

(57) **Abstract**

Disclosed is the use of certain fluorinated derivatives of 2-methoxymalonic acid esters as solvents or solvent additives as well as solvent compositions, electrolyte compositions and respective batteries containing them.

## Description

The invention concerns certain fluorinated derivatives of 2-methoxymalonic acid esters, methods for their preparation and their use as components of electrolyte compositions or solvent compositions.

Li ion batteries, Li air batteries and Li sulfur batteries are well-known rechargeable means for storing electric energy. The advantage of this type of batteries is, for example, a high energy density, and they have no memory effect.

Li ion batteries comprise an anode, a cathode and an electrolyte composition containing a solvent, a conductive salt and often additives. The solvent is an aprotic organic solvent which serves to dissolve the conductive salt. See, for example, WO 2007/042471 which provides information concerning suitable solvents. Suitable conductive salts are known in the art. LiPF₆ is the preferred conductive salt. Other conductive salts are also suitable as constituent of the electrolyte solutions of the present invention, for example, e.g. lithium bisoxalatoborate (LiBOB), lithium bis(fluorosulfonyl)imide (LiFSI), lithium bis(trifluorsulfonyl)imide (LiTFSI) or LiBF₄.

Additives improve the properties of the Li ion batteries, e.g. the life of the battery or to reduce the flammability. For example, LiPO₂F₂ is applicable as additive. Fluorinated organic compounds, for example, fluorinated cyclic carbonates, improve the life of the battery and reduce the flammability of the solvent.

A dye-sensitized solar cell (DSSC) is a solar cell belonging to the group of thin film solar cells. It is based on a semiconductor formed between a photosensitized anode and a solvent electrolyte composition. One disadvantage of the DSSC design is the use of a liquid electrolyte. At low temperatures the electrolyte can freeze, ending power production and potentially leading to physical damage. Higher temperatures cause the liquid to expand, making sealing the panels a serious problem. Thus, there is a need for alternative electrolyte compositions for DSSCs.

The objective of the present invention is to provide further components for Li ion batteries. Another objective of the present invention is to provide further components for dye-sensitized solar cells. These objectives, and other objectives, are achieved by the invention as outlined in the description and the claims.

One aspect of the present invention concerns the use of compounds which are represented by formula (I) :

R¹O(O)C-CHX-C(O)OR² Formula (I)

wherein R¹ and R² independently denote hydrogen, a linear or branched alkyl group, preferably a C1-C5 alkyl group and optionally substituted by one or more halogen atoms, or an aryl group, for example a phenyl group ; and wherein X is chosen from the group consisting of -OCH₂F, -OCHF₂ and -OCF₃ as a component of an electrolyte composition or of a solvent compostion, preferably for use in rechargeable batteries, especially those rechargeable batteries containing the Li⁺ ion as conductive salt, especially Li ion batteries, Li air batteries and Li sulfur batteries,as a component of an electrolyte composition or of a solvent compostion for use in dye-sensitized solar cells. Compounds are preferred wherein R¹ and R² denote methyl, ethyl, propyl or isopropyl and X denotes -OCH₂F. In a particularly preferred compound for this use, R¹ and R² denote ethyl and X denotes -OCH₂F and the compound is diethyl 2-(fluoromethoxy)malonate (formula II) :

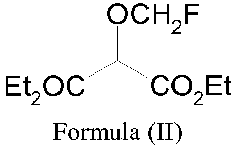

Thus, the invention concerns a process to provide an electrolyte composition or a solvent composition comprising the use of a compound having formula (I) :

R¹O(O)C-CHX-C(O)OR² (I)

wherein R¹ and R² independently denote hydrogen, a linear or branched alkyl group, preferably C1-C5 alkyl and optionally substituted by one or more halogen atoms, or an aryl group, for example a phenyl group ; and wherein X is chosen from the group consisting of -OCH₂F, -OCHF₂ and -OCF₃ as a solvent.

Additionally, the invention concerns a process to provide an electrolyte composition or a solvent composition comprising a mixing step of mixing at least one compound having formula (I) :

R¹O(O)C-CHX-C(O)OR² Formula (I)

wherein R¹ and R² independently denote hydrogen, a linear or branched alkyl group, preferably C1-C5 and optionally substituted by one or more halogen atoms, or an aryl group, for example a phenyl group ; and wherein X is chosen from the group consisting of -OCH₂F, -OCHF₂ and -OCF₃ with a further solvent or a further solvent additive.

In the context of the present invention, the term "comprising" is intended to mean also "consisting of". The plural is intended to include the singular, and vice versa.

A preferred process for the manufacture of compounds of formula (I), and specifically of compounds of formula (II) is described in unpublished EP patent application N° 11153966.4, filed February 11, 2011, in the name of Solvay SA, the whole content of which is incorporated herein for all purposes.

The compounds of formula (I) can be produced from the compounds of formula (III)

R¹O(O)C-CHY-C(O)OR² Formula (III)

wherein R¹ and R² independently denote hydrogen, a linear or branched alkyl group, preferably C1-C5 alkyl and optionally substituted by one or more halogen atoms, or an aryl group, for example a phenyl group ; and wherein Y denotes - OCH₂Z, -OCHZ₂, or -OCZ₃ and Z denotes any halogen other than fluorine, or a oxygen-containing leaving group in a substitution reaction with a fluorinating agent. Z may typically be selected from the group consisting of bromine, chlorine, iodine, O-tosylate (OTos), O-mesylate (OMes), O-triflate (OTf) and O-trimethylsilyl (OTMS), more preferably from chlorine, OTos, OMes and OTMS, even more preferably Z represents chlorine.

The process is typically conducted in liquid phase. This process is usually conducted in the presence of a solvent, preferably a polar solvent, more preferably a polar aprotic solvent. Examples of suitable solvents are acetonitrile, dimethylsulfoxide (DMSO), dimethylsulfone (DMSO₂), sulfolane, dimethylformamide (DMF), N-methyl-2-pyrrolidone (NMP), acetone, ethyl acetate, tetrahydrofurane, dichloromethane, toluene, CF₃-toluene and ionic liquids.

The fluoride is usually used in at least a stoichiometric amount, in particular with a molar ratio of fluoride to compounds of formula (III) or (IV) from 4:1 to 1:1, more particularly from 3:1 to 1:1, especially from 2:1 to 1:1, for example around 1.5.

Optionally, the reaction can be performed in presence of a catalyst known from the prior art, in particular in the presence of potassium iodide (KI).

The reaction is in general conducted under atmospheric pressure. The temperature is usually from 40 to 200°C, often from 50 to 150°C, more often from 70 to 160°C. Most often, the reaction is conducted near the reflux temperature, which will thus depend on the nature of the solvent used.

The duration of the reaction is typically from 15 minutes to 24 hours, in many cases from 30 minutes to 12 hours, for instance from 1 to 8 hours.

The process for the manufacture of the compounds of formula (I) or (II) as defined above may further comprise separating said compounds of formula (I) or (II) from the reaction mixture by a separation method such as distillation, precipitation and/or crystallization, preferably by distillation, in particular by fractional distillation under vacuum.

The source of nucleophilic fluorine is preferably a fluoride, more preferably a fluoride selected from the group consisting of inorganic fluorides and organic fluorides, especially from metal fluorides and organic fluorides, more particularly from alkali fluorides and ammonium fluorides, most preferably from alkali fluorides. Suitable examples of metal fluorides are silver(I)fluoride (AgF) and silver(II)fluoride (AgF₂). Suitable examples of alkali fluorides are sodium fluoride (NaF), potassium fluoride (KF), lithium fluoride (LiF), and caesium fluoride (CsF), advantageously potassium fluoride. Examples of ammonium fluorides are NH₄F and R₄NF where R is an alkyl group such as methyl, ethyl, propyl or butyl.

Another aspect of the present invention concerns solvent compositions for lithium ion batteries, lithium air batteries or lithium sulfur batteries, containing at least one solvent for lithium ion batteries, lithium air batteries or lithium sulfur batteries, and further containing at least one compound represented by formula (I) :

R¹O(O)C-CHX-C(O)OR² Formula (I)

wherein R¹ and R² independently denote hydrogen, a linear or branched alkyl group, preferably C1-C5 alkyl and optionally substituted by one or more halogen atoms, or an aryl group, for example a phenyl group ; and wherein X is chosen from the group consisting of -OCH₂F, OCHF₂ and OCF₃. Compounds are preferred wherein R¹ and R² denote methyl, ethyl, propyl or isopropyl and X denotes -OCH₂F. In a particularly preferred compound, R¹ and R² denote ethyl and X denotes -OCH₂F and the compound of formula (I) is

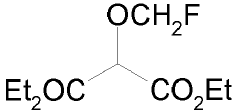

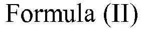

Preferred solvents and solvent additives are given below. In the solvent compositions, the amount of the at least one compound of formula (I) is often equal to or greater than 6 % by weight. The amount of the at least one compound of formula (I) is often equal to or lower than 12 % by weight. The amount of further additives, if they are present, is preferably equal to or greater than 1 % by weight, and is preferably equal to or lower than 12 % by weight. The balance to 100 % by weight is the at least one solvent.

Often, the compounds of formula (I) will be applied as an additive in an amount which is greater than 0 and preferably equal to or lower than 15 % by weight relative to the total electrolyte composition including other solvents, the electrolyte salt and other additives if other additives are present. Preferably, they are present in an amount equal to or greater than 2 % by weight relative to the total electrolyte composition. Preferably, they are present in the electrolyte composition in an amount of equal to or lower than 10 % by weight relative to the total weight of the electrolyte composition. The term "total electrolyte composition" denotes compositions containing at least one compound of formula (I) of the invention, an electrolyte salt and preferably at least one further solvent and optionally further additives.

Compounds of formula (I) are often applied together with at least one solvent. Aprotic solvents suitable for use in Li ion batteries, Li air batteries and Li sulfur batteries are known.

Suitable solvents (which generally are aprotic organic solvents) are known to the expert in the field of Li ion batteries. For example, organic carbonates, but also lactones, formamides, pyrrolidinones, oxazolidinones, nitroalkanes, N,N-substituted urethanes, sulfolane, dialkyl sulfoxides, dialkyl sulfites, acetates, nitriles, acetamides, glycol ethers, dioxolanes, dialkyloxyethanes, trifluoroacetamides, are very suitable as solvents.

Preferably, the aprotic organic solvent is selected from the group of dialkyl carbonates (which are linear) and alkylene carbonates (which are cyclic), and wherein the term "alkyl" denotes preferably C1 to C4 alkyl, the term "alkylene" denotes preferably C2 to C7 alkylene groups, including a vinylidene group, wherein the alkylene group preferably comprises a bridge of 2 carbon atoms between the oxygen atoms of the -O-C(O)-O- group ; ketones, nitriles and formamides. Dimethyl formamide, carboxylic acid amides, for example, N,N-dimethyl acetamide and N,N-diethyl acetamide, acetone, acetonitrile, linear dialkyl carbonates, e.g. dimethyl carbonate, diethyl carbonate, methyl ethyl carbonate, cyclic alkylene carbonates, e.g. ethylene carbonate, propylene carbonate, and vinylidene carbonate, are suitable solvents.

Fluorosubstituted compounds different from the compounds of formula (I) mentioned above, for example, fluorinated carbonic esters which are selected from the group of fluorosubstituted ethylene carbonates, polyfluorosubstituted dimethyl carbonates, fluorosubstituted ethyl methyl carbonates, and fluorosubstituted diethyl carbonates are other solvents or, preferably, suitable additives or in the electrolytic compositions. Preferred fluorosubstituted carbonates are monofluoroethylene carbonate, 4,4-difluoro ethylene carbonate, 4,5-difluoro ethylene carbonate, 4-fluoro-4-methyl ethylene carbonate, 4,5-difluoro-4-methyl ethylene carbonate, 4-fluoro-5-methyl ethylene carbonate, 4,4-difluoro-5-methyl ethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoro ethylene carbonate, 4-(fluoromethyl)-5-fluoro ethylene carbonate, 4-fluoro-4,5-dimethyl ethylene carbonate, 4,5-difluoro-4,5-dimethyl ethylene carbonate, and 4,4-difluoro-5,5-dimethyl ethylene carbonate ; dimethyl carbonate derivatives including fluoromethyl methyl carbonate, difluoromethyl methyl carbonate, trifluoromethyl methyl carbonate, bis(difluoro)methyl carbonate, and bis(trifluoro)methyl carbonate ; ethyl methyl carbonate derivatives including 2-fluoroethyl methyl carbonate, ethyl fluoromethyl carbonate, 2,2-difluoroethyl methyl carbonate, 2-fluoroethyl fluoromethyl carbonate, ethyl difluoromethyl carbonate, 2,2,2-trifluoroethyl methyl carbonate, 2,2-difluoroethyl fluoromethyl carbonate, 2-fluoroethyl difluoromethyl carbonate, and ethyl trifluoromethyl carbonate ; and diethyl carbonate derivatives including ethyl (2-fluoroethyl) carbonate, ethyl (2,2-difluoroethyl) carbonate, bis(2-fluoroethyl) carbonate, ethyl (2,2,2-trifluoroethyl) carbonate, 2,2-difluoroethyl 2'-fluoroethyl carbonate, bis(2,2-difluoroethyl) carbonate, 2,2,2-trifluoroethyl 2'-fluoroethyl carbonate, 2,2,2-trifluoroethyl 2',2'-difluoroethyl carbonate, and bis(2,2,2-trifluoroethyl) carbonate, 4-fluoro-4-vinylethylene carbonate, 4-fluoro-5-vinylethylene carbonate, 4,4-difluoro-4-vinylethylene carbonate, 4,5-difluoro-4-vinylethylene carbonate, 4-fluoro-4,5-divinylethylene carbonate, 4,5-difluoro-4,5-divinylethylene carbonate, 4-fluoro-4-phenylethylene carbonate, 4-fluoro-5-phenylethylene carbonate, 4,4-difluoro-5-phenylethylene carbonate, 4,5-difluoro-4-phenylethylene carbonate and 4,5-difluoro-4,5-diphenylethylene carbonate, fluoromethyl phenyl carbonate, 2-fluoroethyl phenyl carbonate, 2,2-difluoroethyl phenyl carbonate and 2,2,2-trifluoroethyl phenyl carbonate, fluoromethyl vinyl carbonate, 2-fluoroethyl vinyl carbonate, 2,2-difluoroethyl vinyl carbonate and 2,2,2-trifluoroethyl vinyl carbonate, fluoromethyl allyl carbonate, 2-fluoroethyl allyl carbonate, 2,2-difluoroethyl allyl carbonate and 2,2,2-trifluoroethyl allyl carbonate are mentioned as suitable components of electrolyte solutions of the invention.

Other suitable additives useful in the electrolyte compositions according to the present invention are those described in WO2007/042471 selected from the group of aromatic compounds consisting of 1-acetoxy-2-fluorobenzene, 1-acetoxy-3-fluorobenzene, 1-acetoxy-4-fluorobenzene, 2-acetoxy-5-fluorobenzyl acetate, 4-acetyl-2,2-difluoro-1,3-benzodioxole, 6-acetyl-2,2,3,3-tetrafluorobenzo-1,4-dioxin, 1-acetyl-3-trifluoromethyl-5-phenylpyrazole, 1-acetyl-5-trifluoromethyl-3-phenylpyrazole, benzotrifluoride, benzoyltrifluoroacetone, 1-benzoyl-3-trifluoromethyl-5-methylpyrazole, 1-benzoyl-5-trifluoromethyl-3-methylpyrazole, 1-benzoyloxy-4-(2,2,2-trifluoroethoxy)benzene, 1-benzoyl-4-trifluoromethylbenzene, 1,4-bis(t-butoxy)tetrafluorobenzene, 2,2-bis(4-methylphenyl)hexafluoropropane, bis(pentafluorophenyl) carbonate, 1,4-bis(1,1,2,2-tetrafluoroethoxy)benzene, 2,4-bis(trifluoromethyl)benzaldehyde, 2,6-bis(trifluoromethyl)benzonitrile, difluoroacetophenone, 2,2-difluorobenzodioxole, 2,2-difluoro-1,3-benzodioxole-4-carbaldehyde, 1-[4-(difluoromethoxy)phenyl]ethanone, 3-(3,5-difluorophenyl)-1-propene, fluorobenzophenone, difluorobenzophenone, 1-(2'-fluoro[1,1'-biphenyl]-4-yl)propan-1-one, 6-fluoro-3,4-dihydro-2H-1-benzothiin-4-one, 4-fluorodiphenyl ether, 5-fluoro-1-indanone, 1-(3-fluoro-4-methoxyphenyl)ethanone, fluorophenylacetonitrile, the group of compounds having an Si-C bond consisting of bis(pentafluorophenyl)dimethylsilane, 1,2-bis[difluoro(methyl)silyl]ethane, N,O-bis(trimethylsilyl)trifluoroacetamide, N-(t-butyldimethylsilyl)-N-methyltrifluoroacetamide, t-butyldimethylsilyl trifluoromethanesulphonate, 2-dimethylamino-1,3-dimethylimidazolium trimethyldifluorosiliconate, diphenyldifluorosilane, the group of compounds having a C=O bond consisting of bis(1,1,1,3,3,3-hexafluoroprop-2-yl) 2-methylenesuccinate, bis(1,1,1,3,3,3-hexafluoroprop-2-yl) maleate, bis(2,2,2-trifluoroethyl) maleate, bis(perfluorooctyl) fumarate, bis(perfluoroisopropyl) ketone, 2,6-bis(2,2,2-trifluoroacetyl)cyclohexanone, butyl 2,2-difluoroacetate, cyclopropyl 4-fluorophenyl ketone, diethyl perfluoroadipate, N,N-diethyl-2,3,3,3-tetrafluoropropionamide, the group of compounds having a C=C bond consisting of allyl 1H, 1H-heptafluorobutyl ether, trans-1,2-bis(perfluorohexyl)ethylene, (E)-5,6-difluoroocta-3,7-diene-2-one, the group of amines consisting of N,N-diethyl-1,1,2,3,3,3 -hexafluoropropylamine

The solvent may also additionally contain benzene, fluorobenzene, toluene, trifluorotoluene, xylene or cyclohexane.

The term "difluoroacetophenone" encompasses the isomers with the fluorine substitution in the 2,3-, 2,4-, 2,5-, 2,6-, 3,4- and 3,5-position on the aromatic ring.

The term "fluorobenzophenone" encompasses in particular the isomers 2-fluorobenzophenone and 4-fluorobenzophenone.

The term "difluorobenzophenone" encompasses the isomers with the fluorine substitution in the 2,3'-, 2,3-, 2,4'-, 2,4-, 2,5-, 2,6-, 3,3'-, 3,4'-, 3,4-, 3,5-and 4,4'-position.

The term "fluorophenylacetonitrile" encompasses the isomers with the fluorine substitution in the 2-, 3- and 4-position.

The compounds can be synthesized in a known manner and are also commercially available, for example from ABCR GmbH & Co.KG, Karlsruhe, Germany.

Preferred fluorinated organic compounds useful as solvents or, preferably, as solvent additives in the electrolyte compositions are selected from the group of fluorosubstituted carboxylic acid esters, fluorosubstituted carboxylic acid amides, fluorosubstituted fluorinated ethers, fluorosubstituted carbamates, fluorosubstituted cyclic carbonates, fluorosubstituted acyclic carbonates, fluorosubstituted phosphites, fluorosubstituted phosphoranes, fluorosubstituted phosphoric acid esters, fluorosubstituted phosphonic acid esters and saturated or unsaturated fluorosubstituted heterocycles.

Suitable fluorinated ethers applicable as solvent or additional additive in the electrolytic compositions are for example those as described in US 5,916,708, namely partially fluorinated ethers of formula (A)

RO-[(CH₂)ₘO]ₙ-CF₂-CFH-X (A)

wherein
R is a linear alkyl group with 1 to 10 C atoms or a branched alkyl group with 3 to 10 C atoms,
X is fluorine, chlorine or a perfluoroalkyl group with 1 to 6 C atoms which groups may include ether oxygen,
m is an integer of 2 to 6 and
n is an integer of 1 to 8,
and/or of formula (II)

X-CFH-CF₂O-[(CH₂)ₘO]n-CF₂-CFH-X (II)

wherein
X, m and n have the meaning given above.

Partially fluorinated carbamates suitable as solvent or additional additives are for example those described in US 6,159,640, namely compounds of the formula R¹R²N-C(O)OR³ wherein R¹ and R² independently are the same or different, and are linear C1-C6-alkyl, branched C3-C6-alkyl, C3-C7-cycloalkyl, or R¹ and R² are connected directly or via one or more additional N and/or O atoms forming a ring with 3 to 7 members. Optionally, additional N atoms in the ring are saturated with C 1 to C3 alkyl groups, and additionally, the carbon atoms of the ring may be substituted by C1 to C3 alkyl groups. In the groups R¹ and R², one or more hydrogen atoms may be substituted by fluorine atoms. R³ is a partially fluorinated or perfluorinated linear or branched alkyl group with 1 to 6 or, respectively, 3 to 6 carbon atoms, or a partially or perfluorinated cycloalkyl group with 3 to 7 C atoms, which may be substituted by one or more C1 to C6 alkyl groups.

Fluorinated acetamides suitable as solvent or additional solvent additive are for example those described US 6,489,064, namely partially fluorinated amide corresponding to formula R¹CO-NR²R³ wherein R¹ is a linear C1 - C6 alkyl group in which at least one hydrogen atom is replaced by fluorine, or a branched C3 - C6 alkyl group in which at least one hydrogen atom is replaced by fluorine, or a C3 - C7 cycloalkyl group optionally substituted one or more times by a linear C1 - C6 alkyl group or branched C3 - C6 alkyl group or both in which at least one hydrogen atom of the cycloalkyl group or the optional linear or branched alkyl substituent or both is replaced by fluorine, and R² and R³ independently represent an identical or different linear C1 - C6 alkyl group, a branched C3 - C6 alkyl group or a C3 - C7 cycloalkyl group, or together with the amide nitrogen form a saturated five or six-membered nitrogen-containing ring, or are joined with one or more additional N and/or O atom(s) to form a 4 to 7-membered ring in which the additional N atoms present in the ring are optionally saturated with C1 - C3 alkyl groups and the ring carbon atoms may also carry C1 - C3 alkyl groups.

Partially fluorinated esters suitable as solvent or solvent additive are for example those described in US 6,677,085 partially fluorinated compound derived from a diol corresponding to the formula R¹CO-O-[CHR³(CH₂)ₘ-O]ₙ-R² wherein R¹ is a (C1 - C8) alkyl group or a (C3 - C8) cycloalkyl group, wherein each of said groups is partially fluorinated or perfluorinated so that at least one hydrogen atom of the group is replaced by fluorine ; R² is a (C1 - C8) alkyl carbonyl or (C3 - C8) cycloalkyl carbonyl group, wherein said alkylcarbonyl or cycloalkylcarbonyl group may optionally be partially fluorinated or perfluorinated ; R³ is a hydrogen atom or a (C1 - C8) alkyl or (C3 - C8) cycloalkyl group ; m is 0, 1, 2 or 3, and n is 1, 2 or 3.

The electrolyte composition, further to the at least one compound of formula (I), comprises at least one dissolved electrolyte salt. Such salts have the general formula MₐA_{b}. M is a metal cation, and A is an anion. The overall charge of the salt MₐA_{b} is 0. M is preferably selected from Li⁺ and NR₄⁺. Preferred anions are PF₆⁻, PO₂F₂⁻, AsF₆⁻, BF₄⁻, ClO₄⁻, N(CF₃SO₂)₂⁻and N(i-C₃F₇SO₂)₂⁻.

Preferably, M is Li⁺. Especially preferably, M is Li⁺ and the solution comprises at least one electrolyte salt selected from the group consisting of LiBF₄, LiClO₄, LiAsF₆, LiPF₆, LiPO₂F₂, LN(CF₃SO₂)₂ and LiN(i-C₃F₇SO₂)₂. Lithium bis(oxalato)borate can be applied as an additional additive. The concentration of the electrolyte salt is preferably 1 ± 0.1 molar. Often, the electrolyte composition may comprise LiPF₆ and LiPO₂F₂.

If LiPO₂F₂ is the only electrolyte salt, its concentration in the electrolyte composition is, as mentioned, preferably 1 ± 0.1 molar. If LiPO₂F₂ is applied as an additive together with another electrolyte salt, especially together with LiPF₆, the concentration of LiPO₂F₂ in the electrolyte composition preferably is equal to or greater than 0.1 % by weight, more preferably equal to or greater than 0.5 % by weight ; preferably, its concentration is equal to or lower than 10 % by weight, more preferably, equal to or lower than 5 % by weight when the total electrolyte composition including electrolyte salt, solvent and additives is set as 100 % by weight.

Another aspect of the present invention are electrolytic compositions comprising at least one compound represented by formula (I) :

R¹O(O)C-CHX-C(O)OR² Formula (I)

wherein R¹ and R² independently denote hydrogen, a linear or branched alkyl group, preferably a C1-C5 alkyl group and optionally substituted by one or more halogen atoms, or an aryl group, for example a phenyl group ; and wherein X is chosen from the group consisting of -OCH₂F, -OCHF₂ and -OCF₃.

Preferably, the electrolyte compositions comprise at least one compound of formula (I), at least one electrolyte salt and at least one solvent and optionally at least one further additive. Preferred compounds of formula (I), preferred electrolyte salts, preferred solvents and preferred additives are those given above.

The compound of formula (I) is contained in the compositions in an amount greater than 0 and preferably equal to or lower than 10 % by weight of the total composition. The amount of electrolyte salt is preferably in the range 1 ±0.1 molar.

The compounds of formula (I) can be introduced into the electrolyte composition separately or in the form of a mixture with other compounds, e.g. as a mixture with a solvent or solvents used in the electrolyte composition or in together with electrolyte salt or other additives.

Still another aspect of the present invention are Li ion batteries, Li air batteries and Li sulfur batteries comprising a solvent composition as outlined above or an electrolyte composition as outlined above.

Yet another aspect of the present invention are dye-sensitized solar cells comprising a solvent composition as outlined above or an electrolyte composition as outlined above.

Should the disclosure of any patents, patent applications, and publications which are incorporated herein by reference conflict with the description of the present application to the extent that it may render a term unclear, the present description shall take precedence.

The following examples are intended to describe the invention in further detail without the intention to limit it.

### Example 1 : Preparation of diethyl 2-(fluoromethoxy)malonate (formula II)

Diethyl 2-(chloromethoxy)malonate (18.0 g), acetonitrile (30 ml), potassium fluoride (7.0 g), and potassium iodide (2.0 g) were placed in a 100 ml three-neck Teflon^{®} flask. The reaction mixture was heated under reflux condition under a nitrogen atmosphere for 2 h. Water was added and the organic layer was separated and washed successively with 2 % aqueous sodium carbonate solution, 2 % aqueous sodium disulfite solution and water. After drying over sodium sulfate the volatiles were removed under reduced pressure using a rotary evaporator to give 11.3 g of the crude product. Optionally, the crude product can be purified by distillation or chromatography.

### Example 2 : Manufacture of electrolyte compositions containing the compound of formula (II)

Abbreviations :
EC = Ethylene carbonate
DMC = Dimethyl carbonate
PC = Propylene carbonate
F1EC = fluoroethylene carbonate
LiPOF = LiPO₂F₂

| Amount of compound of formula (II) [% by weight] | Solvent [balance to 100 % by weight] | Electrolyte salt ; amount [mol/l] | Further additive ; amount [% by weight] |
|---|---|---|---|
| 3 | EC | 1 | ---- |
| 3 | EC/PC vol/vol 1:1 | 1 | F1EC ; 2 |
| 3 | EC/PC vol/vol 1 | 1 | LiPOF ; 1 |
| 3 | EC/PC vol/vol 1:1 | 1 | ---- |
| 3 | EC/DMC vol/vol 1:1 | 1 | F1EC; 2 |
| 3 | EC/DMC vol/vol 1:1 | 1 | LiPOF; 1 |
| 3 | EC/DMC vol/vol 1:1 | 1 | ---- |
| 3 | DMC | 1 | ---- |

The electrolyte compositions are prepared by mixing appropriate amounts of the compound of formula (II), the solvent or solvents, the electrolyte salt and additives if applied in a vessel which is dried beforehand and through which dry N₂ is passed to provide an atmosphere which is dry and free of oxygen.

## Claims

1. Use of a compound of formula (I) :
R¹O(O)C-CHX-C(O)OR² Formula (I)
wherein R¹ and R² independently denote hydrogen, a linear or branched alkyl group, optionally substituted by one or more halogen atoms, or an aryl group, for example a phenyl group; and wherein X is chosen from the group consisting of -OCH₂F, -OCHF₂ and -OCF₃ as a component of an electrolyte composition or of a solvent composition.

2. Use of a compound of formula (I) according to claim 1 wherein X denotes -OCH₂F.

3. Use of a compound of formula (I) according to claim 1 or 2 wherein R¹ and R² denotes methyl, ethyl, propyl or isopropyl.

4. Use of a compound of formula (I) according to any one of the claims 1 to 3 wherein the compound is diethyl 2-(fluoromethoxy)malonate (formula II) :

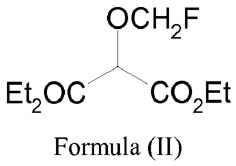

5. Use of a compound of formula (I) according to any one of the claims 1 to 4 wherein the compound of formula (I) is a component of an electrolyte composition for lithium ion batteries, lithium air batteries or lithium sulfur batteries or the compound of formula (I) is a component of a solvent composition for lithium ion batteries, lithium air batteries or lithium sulfur batteries.

6. Use of a compound of formula (I) according to any one of the claims 1 to 4 wherein the compound of formula (I) is a component of an electrolyte composition for dye-sensitized solar cells or the compound of formula (I) is a component of a solvent composition dye-sensitized solar cells.

7. Use of a compound of formula (I) according to any one of the claims 1 to 6 wherein the compound of formula (I) is a solvent.

8. Use of a compound of formula (I) according to any one of the claims 1 to 6 wherein the compound of formula (I) is a solvent additive.

9. A solvent composition containing at least one compound of formula (I) according to any one of the claims 1 to 8.

10. An electrolyte composition containing a compound of formula (I) according to any one of the claims 1 to 8 and at least one electrolyte salt.

11. A lithium ion battery containing a compound of formula (I) according to any one of the claims 1 to 8.

12. A dye-sensitized solar cell containing a compound of formula (I) according to any one of the claims 1 to 8.
